# EUROPEAN PATENT SPECIFICATION

(11) **EP 4 428 983 B1**
(45) Date of publication and mention of the grant of the patent: **15.07.2026**
(21) Application number: 23796591.8
(22) Date of filing: 22.02.2023
(51) Int. Cl.: H01M 10/0585, H01M 10/0525, H01M 10/42

(54) **ELECTRODE ASSEMBLY AND BATTERY CELL INCLUDING THE SAME**
ELEKTRODENANORDNUNG UND BATTERIEZELLE DAMIT
ENSEMBLE ÉLECTRODE ET ÉLÉMENT DE BATTERIE LE COMPRENANT

(30) Priority: 25.04.2022 KR 20220050981; 20.02.2023 KR 20230022115
(43) Date of publication of application: 11.09.2024
(73) Proprietor: LG Energy Solution, Ltd., Seoul 07335 (KR)
(72) Inventor: KIM, Daesoo, Daejeon 34122 (KR); KIM, Youngdeok, Daejeon 34122 (KR); CHOI, Soon Hyung, Daejeon 34122 (KR)
(74) Representative: Plasseraud IP
(86) International application number: PCT/KR2023/002536
(87) International publication number: WO 2023/210941

(56) References cited:
- EP-A1- 3 667 798
- EP-A1- 3 716 390
- EP-A2- 2 086 044
- WO-A1-2022/075637
- JP-A- 2017 147 161
- KR-A- 20110 046 077
- KR-A- 20200 018 977
- KR-A- 20210 150 924
- KR-A- 20220 046 821

## Description

### [TECHNICAL FIELD]

### Cross Citation with Related Application(s)

This application claims the benefit of Korean Patent Application No. 10-2022-0050981 filed on April 25, 2022 and Korean Patent Application No. 10-2023-0022115 filed on February 20, 2023 in the Korean Intellectual Property Office.

The present disclosure relates to an electrode assembly and a battery cell including the same, and more particularly, to an electrode assembly capable of securing the stability of a battery cell by generating a short circuit under overvoltage conditions, and a battery cell including the same.

### [BACKGROUND]

With the technology development and increased demand for mobile devices, demand for secondary batteries as energy sources has been rapidly increasing. A variety of researches on batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, as the need for a large-capacity secondary battery structure is increasing along with the utilization of the secondary battery as an energy storage source, there is a growing demand for a battery pack of middle- or large-sized module structure which is an assembly of battery modules in which a plurality of secondary batteries are connected in series or in parallel.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, being freely charged and discharged, and having very low self-discharge rate and high energy density.

The secondary battery may be classified, based on the shape of a battery case, into a cylindrical or prismatic battery wherein an electrode assembly is mounted in a cylindrical or prismatic metal can, and a pouch-type battery in which the electrode assembly is mounted in a pouch-shaped case made of an aluminum laminate sheet.

Further, the secondary battery may be classified, based on the structure of an electrode assembly having a structure in which a positive electrode and a negative electrode are stacked with a separator being interposed between the positive electrode and the negative electrode. Typically, there may be mentioned a jelly-roll (wound) type structure in which long sheet-type positive and negative electrodes are wound with a separator interposed therebetween, a stacked (laminated) type structure in which a plurality of positive and negative electrodes cut to a predetermined unit size are stacked in a sequential order with separators interposed therebetween, or the like. In recent years, in order to solve problems caused by the jelly-roll type electrode assembly and the stacked type electrode assembly, there has been developed a stacked/folded type electrode assembly, which is a combination of the jelly-roll type electrode assembly and the stacked type electrode assembly.

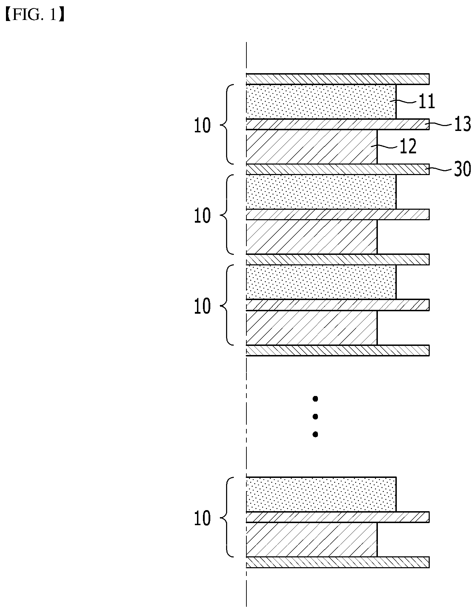

FIG. 1 is a side view of a conventional electrode assembly.

Referring to FIG. 1, the electrode assembly is a stacked electrode assembly, which is mainly formed either by stacking a negative electrode 11, a first separator 13, and a positive electrode 12, or by stacking unit cells, in which the positive electrode 12, the first separator 13, and the negative electrode 11 are sequentially stacked, with the second separator 30 interposed therebetween.

Typically, since the first separator 13 is formed longer than the length of the positive electrode 12 or the negative electrode 11, the end of the first separator 13 in the electrode assembly exists in a state it is not adhered to the positive electrode 12 or the negative electrode 11. Here, the first separator 13 and the second separator 30 have substantially the same configuration.

In addition, one end of the negative electrode 11 usually protrudes more than one end of the positive electrode 12. In a unit cell having such a structure, problems such as further decomposition of the electrolyte and oxygen desorption of the positive electrode occur in an overvoltage state in which the operating range of the battery is 4.5 V or more, thereby increasing the possibility of explosion of the battery. Therefore, when the battery is overcharged, there is a need for a technique to prevent the battery from short-circuiting and causing the voltage to rise suddenly.

EP 3716 390 A1 discloses an electrode assembly having negative electrode disposed as outermost electrode, and lithium-ion secondary battery having same. EP 2086 044 A2 discloses an electric storage device.

### [DETAILED DESCRIPTION OF THE INVENTION]

### [Technical Problem]

It is an object of the present disclosure to provide an electrode assembly with improved safety and a battery cell including the same.

However, the problem to be solved by embodiments of the present disclosure is not limited to the above-described problems, and can be variously expanded within the scope of the technical idea included in the present disclosure.

### [Technical Solution]

According to one embodiment of the present disclosure, there is provided an electrode assembly as laid out in appended claim 1.

A difference between the length of the second negative electrode and the length of the second positive electrode may be less than 1%.

A difference between the length of the second negative electrode and the length of the second positive electrode may be 0.4% or less.

A distance between an end of the second negative electrode and an end of the second separator may be longer than a distance between an end of the second positive electrode and an end of the second separator.

The second unit cell may deposit lithium at a potential lower than that of the first unit cell.

The second unit cell may deposit lithium when the voltage applied to the second unit cell is 4.5V or more and 5.5V or less.

The second unit cell may be configured such that a capacity appearance of the positive electrode of the second unit cell is greater than a capacity appearance of the negative electrode of the second unit cell.

The number of the first unit cell may be at least one or more.

The second unit cell may be an outermost unit cell.

The second unit cell may be located between the plurality of first unit cells.

As the number of the second unit cells increases, the maximum voltage during overcharge of the battery may decrease.

According to another embodiment of the present disclosure, there is provided a battery cell comprising the above-mentioned electrode assembly.

### [Advantageous Effects]

According to embodiments, the difference in length between one end of the negative electrode and one end of the positive electrode can be used to improve the safety of an electrode assembly and a battery cell including the same.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a side view of a conventional electrode assembly.
FIG. 2 is a side view of an electrode assembly according to one embodiment of the present disclosure.
FIG. 3(a) is a perspective view of a first unit cell constituting the electrode assembly according to one embodiment of the present disclosure. FIG. 3(b) is a perspective view of a second unit cell constituting an electrode assembly according to one embodiment of the present disclosure.
FIG. 4 is a perspective view showing a second unit cell in an overcharged state according to one embodiment of the present disclosure.
FIG. 5 is a side view of a unit cell constituting an electrode assembly according to one embodiment of the present disclosure.
FIG. 6 is a graph showing the voltage applied to the battery during overcharge of the battery.
FIG. 7 is a photograph showing a conventional unit cell in an overcharged state.
FIG. 8 is a photograph of a unit cell in an overcharged state according to an embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same or like reference numerals designate same elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

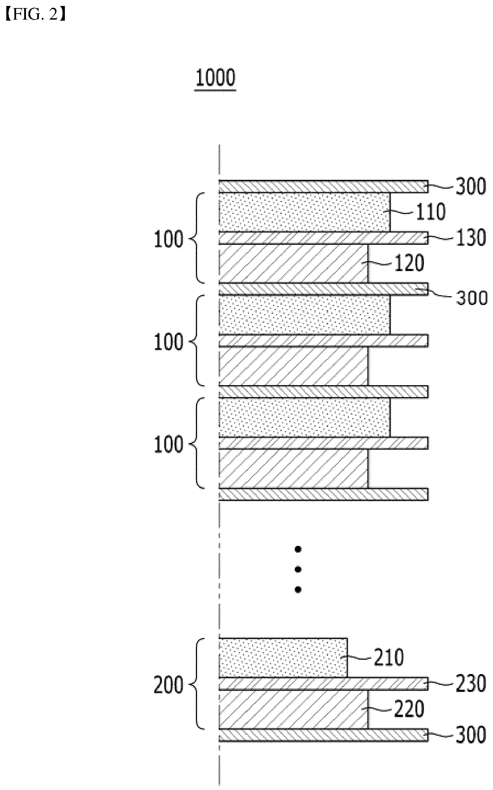

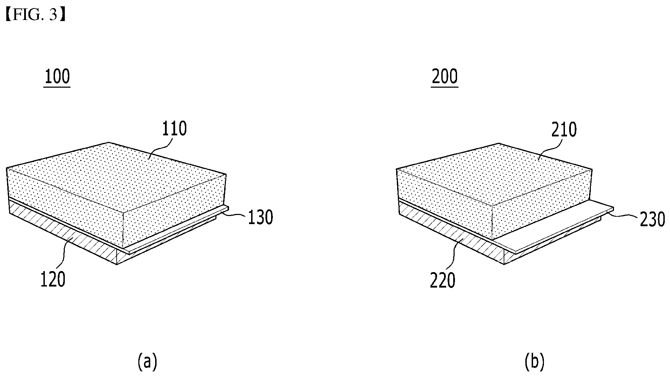

FIG. 2 is a side view of an electrode assembly according to one embodiment of the present disclosure. FIG. 3(a) is a perspective view of a first unit cell constituting the electrode assembly according to one embodiment of the present disclosure. FIG. 3(b) is a perspective view of a second unit cell constituting an electrode assembly according to one embodiment of the present disclosure.

Referring to FIG. 2, the electrode assembly 1000 is a stacked electrode assembly and includes a first unit cell 100, a second unit cell 200 and a third separator 300. The electrode assembly 1000 of FIG. 2 schematically shows one region when the central portion of the electrode assembly 1000 is cut in the z-axis direction.

More specifically, referring to FIGS. 2 and 3(a), the first unit cell 100 has a structure in which a first positive electrode 120, a first separator 130, and a first negative electrode 110 are stacked. Specifically, the first unit cell 100 has a structure in which the end of the first negative electrode 110 protrudes more than the end of the first positive electrode 120. That is, the length of the first negative electrode 110 of the first unit cell 100 may be longer than the length of the first positive electrode 120. However, the lengths of the first negative electrode 110 and the first positive electrode 120 may be shorter than the length of the first separator 130. Therefore, the end of the first separator 130 exist in a state that it is not adhered to the first negative electrode 110 or the first positive electrode 120.

Referring to FIGS. 2 and 3(b), the second unit cell 200 has a structure in which a second positive electrode 220, a second separator 230, and a second negative electrode 210 are stacked. More specifically, the second unit cell 200 has a structure in which the end of the second positive electrode 220 protrudes more than the end of the second negative electrode 210. That is, the length of the second positive electrode 220 of the second unit cell 200 may be longer than the length of the second negative electrode 210. **In** this case, the difference between the length of the second negative electrode 210 and the length of the second positive electrode 220 may be less than 1%.

However, the lengths of the second negative electrode 210 and the second positive electrode 220 may be shorter than the length of the second separator 230. Therefore, the end of the second separator 230 exists in a state that it is not adhered to the second negative electrode 210 or the second positive electrode 220.

At this time, since the length of the second negative electrode 210 is shorter than the length of the second positive electrode 220, the distance between the end of the second negative electrode 210 and the end of the second separator 230 may be longer than the distance between the end of the second positive electrode 220 and the end of the second separator 230.

Referring to FIG. 2, the third separator 300 is stacked while being located between the first unit cell 100 and the second unit cell 200, and also is located while being in contact with one surface of the first unit cell 100 and the second unit cell 200 located at the outermost side.

That is, the third separator 300 is located between the first unit cell 100 and the second unit cell 200, so that it serves to insulate the first unit cell 100 and the second unit cell 200. Further, the third separator 300 plays the same role as the first separator 130 of the first unit cell 100 and the second separator 230 of the second unit cell 200, and may be formed of the same material.

**In** FIG. 2, the first unit cell 100 and the second unit cell 200 constituting in the electrode assembly 1000 according to one embodiment of the present disclosure may be respectively provided in one or more numbers. That is, the total number of the first unit cell 100 and the second unit cell 200 may be two or more.

**In** one example, the total number of the first unit cells 100 and the second unit cells 200 constituting the electrode assembly 1000 may be 20, and specifically, the electrode assembly may consist of 19 first unit cells 100 and one second unit cell 200. **In** this case, when a plurality of first unit cells 100 are stacked to form a stacked body, the second unit cell 200 may be provided adjacent to the first unit cell 100 located at the outermost side in the stacking direction of the stacked body. That is, the second unit cell 200 may be the outermost unit cell of the stacked body.

However, the electrode assembly 1000 is not limited to the above structure. Further, the numbers of the first unit cell 100 and the second unit cell 200 are not limited to those described above, and can be changed arbitrarily by the user. For example, the second unit cells 200 may be located at both outermost sides of a stacked body in which a plurality of first unit cells 100 are stacked, and may be formed while at least one or more second unit cells 200 are located between the first unit cells 100. That is, the number of second unit cells 200 may be at least one. In this case, as the number of second unit cells 200 increases, the maximum voltage of the battery during overcharge may decrease.

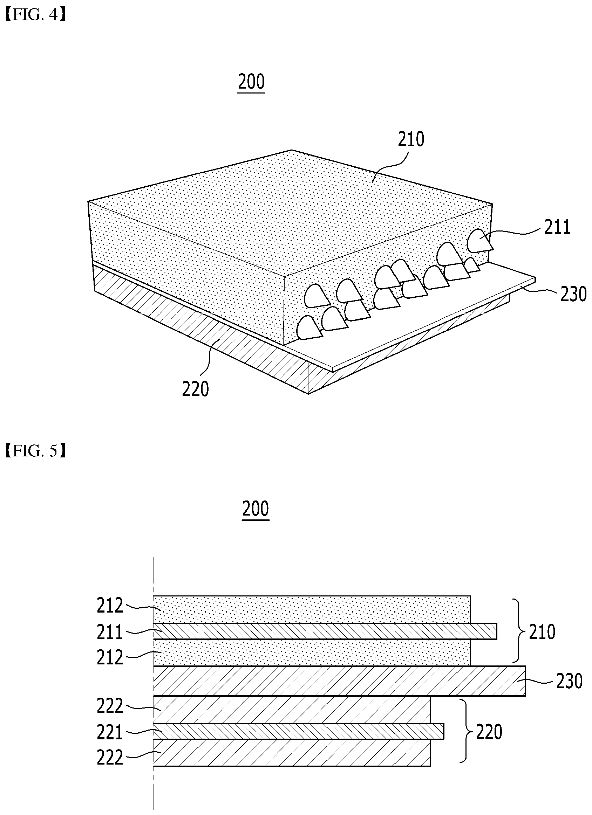

FIG. 4 is a perspective view showing a second unit cell in an overcharged state according to one embodiment of the present disclosure.

Referring to FIG. 4, in a state where an overvoltage is applied to the battery to cause overcharge, the second unit cell 200 according to one embodiment of the present disclosure deposits lithium (Li) to short-circuit a battery.

Typically, the operating range of a lithium secondary battery does not exceed 4.5V. However, due to an operation abnormality of a charger or a BMS (Battery Management System), an issue in which the battery is overcharged with a voltage of 4.5V or higher may occur.

When the battery is overcharged, since the end of the second positive electrode 220 of the second unit cell 200 protrudes more than the end of the second negative electrode 210, the second negative electrode 210 is overcharged more than the second positive electrode 220, which easily causes lithium deposition.

More specifically, the reason why lithium is deposited on the second negative electrode 210 of the second unit cell 200 is as follows. When the end of the second positive electrode 220 protrudes more than the end of the second negative electrode 210, the capacity appearance of the locally protruding second positive electrode 220 becomes larger than the capacity appearance of the second negative electrode 210. In this case, extra lithium ions that are not inserted into the second negative electrode 210 during charging are generated in the form of lithium deposition.

That is, when the same voltage is applied to the first unit cell 100 and the second unit cell 200, lithium is not deposited in the first unit cell 100, but lithium may be deposited in the second unit cell 200. In this case, due to the lithium deposited in the second unit cell 200, a short circuit of the battery may occur, so that the stability of the battery can be improved by preventing the voltage from rising.

That is, the electrode assembly according to one embodiment of the present disclosure including the second unit cell 200 allows the deposition of lithium at a lower potential compared to the conventional electrode assembly consisting of the first unit cell 100 alone. Such deposition of lithium causes a short circuit at the negative electrode, which prevents the voltage of the battery from rising and thus improve the stability of the battery.

FIG. 5 is a side view of a unit cell constituting an electrode assembly according to one embodiment of the present disclosure.

In FIG. 5, the second negative electrode 210, the second positive electrode 220, and the second separator 230 constituting the second unit cell 200 described in FIGS. 2 to 4 will be described in detail. The first unit cell 100 differs from the second unit cell 200 only in the length of the positive electrode and the negative electrode, all other configurations are the same, and therefore, the second unit cell 200 will be mainly described herein.

Referring to FIG. 5, the second negative electrode 210 is formed by coating a negative coating layer 212 on a negative current collector 21. The negative current collector 211 is generally made of copper (Cu), and the negative electrode coating layer 212 is located on one side and the other side of the negative electrode current collector 211. The negative electrode coating layer 212 is coated on the negative electrode current collector 211 by mixing a negative electrode active material, a conductive agent, and a binder.

The second positive electrode 220 is formed by coating the positive electrode coating layer 222 on the positive electrode current collector 221. The positive electrode current collector 221 is generally made of aluminum (Al), and the positive electrode coating layer 222 is located on one side and the other side of the positive electrode current collector 221. The positive electrode coating layer 222 is coated on the positive electrode current collector 221 by mixing a positive electrode active material, a conductive agent, and a binder.

The second separator 230 is located between the second negative electrode 210 and the second positive electrode 220. Specifically, the second separator is located between the negative electrode coating layer 212 of the second negative electrode 210 and the positive electrode coating layer 222 of the second positive electrode 220. When the negative electrode coating layer 212 of the second negative electrode 210 and the positive electrode coating layer 222 come into contact with each other, a short-circuit of the battery may be generated. Thus, to prevent this problem, the second separator 230 is located between them.

**[Table 1]**

| | Maximum voltage (V) |
|---|---|
| Comparative Example | 6.243 |
| Experimental Example | 5.369 |

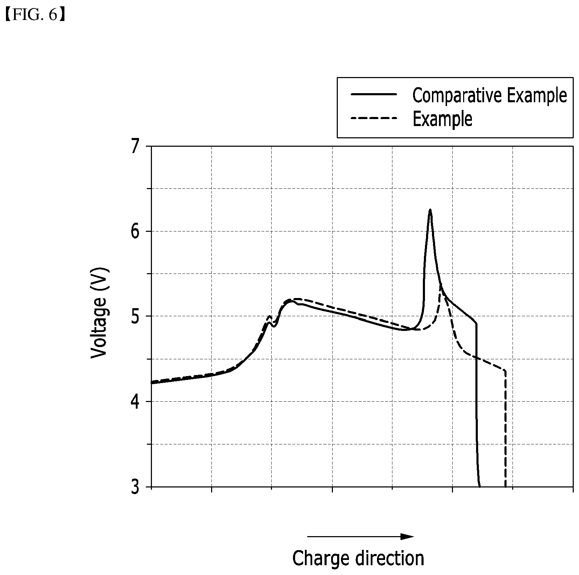

FIG. 6 is a graph showing the voltage applied to the battery during overcharge of the battery. Table 1 shows the maximum voltage applied to each of Comparative Example and Experimental Example during overcharge of the battery.

The Comparative Example is a battery including the conventional electrode assembly of FIG. 1, and the Experimental Example is a battery including an electrode assembly 1000 including the first unit cell 100 and the second unit cell 200 of FIGS. 2 and 3. Specifically, the Experimental Example is an electrode assembly 1000 including the second unit cell 200 located at the outermost side of the stacked body of the first unit cell 100, which may be an electrode assembly 1000 in which a length difference between the second negative electrode 210 and the second positive electrode 220 constituting the second unit cell 200 is 0.4%.

Referring to FIG. 6 and Table 1, it can be seen that when the battery is overcharged, the maximum voltage applied to the battery is lower in the Experimental Example, which is the battery according to one embodiment of the present disclosure.

Specifically, the experiment is to measure the maximum voltage at which a short circuit occurs when the current is applied to the battery up to 8V at a charging rate of 1C.

In the case of the Comparative Example, after the voltage rises to 6.243V during overcharging, a short circuit occurs and the voltage drops again. On the other hand, in the case of the Experimental Example, after the voltage rises to 5.369V during overcharge, a short circuit occurs and the voltage drops again. Specifically, when the voltage applied to the Experimental Example is 4.5V or more and 5.5V or less, a short circuit may occur. Referring to the above experimental results, it can be seen that the maximum voltage of the Experimental Example is about 1V lower than the maximum voltage of the Comparative Example.

Therefore, under the same experimental conditions, since the Experimental Example according to one embodiment of the present disclosure has a smaller voltage rise and a smaller maximum voltage than the Comparative Example, it can be seen that the battery is superior in terms of stability.

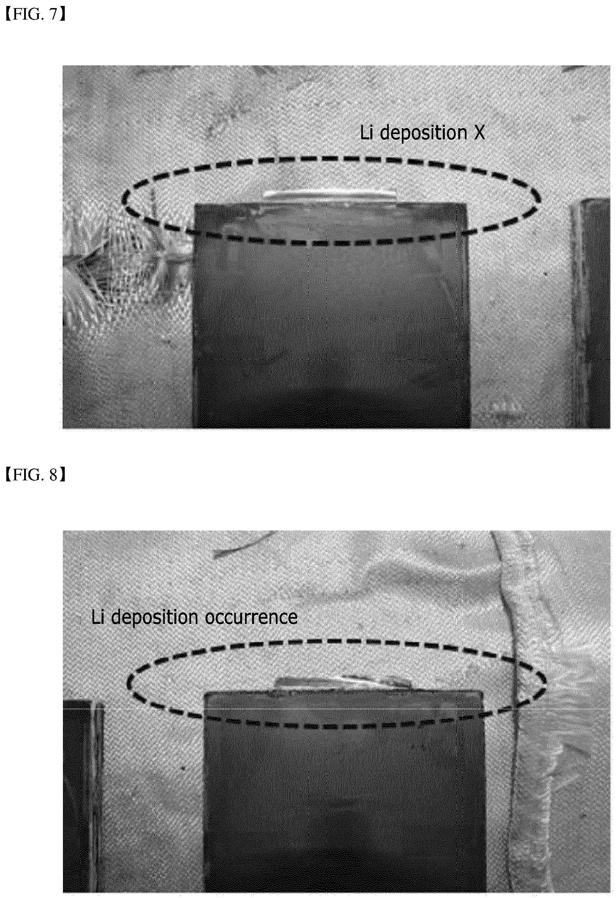

FIG. 7 is a photograph showing a conventional unit cell in an overcharged state. FIG. 8 is a photograph of a unit cell in an overcharged state according to an embodiment of the present disclosure.

The conventional unit cell is the first unit cell of FIGS. 2 and 3, and a unit cell according to one embodiment of the present disclosure may be the second unit cell of FIGS. 2 and 3.

Referring to FIGS. 7 and 8, in the same overcharged state, no lithium is deposited in the first unit cell, but lithium is deposited in the second unit cell. That is, the battery cell including the second unit cell deposits lithium at the same potential as the battery cell including only the first unit cell. In addition, in a battery cell including the second unit cell, lithium is easily deposited at a potential than lower than that of a battery cell composed only of the first unit cell. Specifically, in the second unit cell, lithium may be deposited when the voltage applied to the second unit cell is 4.5 V or more and 5.5 V or less.

A battery cell including a unit cell according to one embodiment of the present disclosure deposits lithium at a predetermined voltage or more, thereby suppressing an increase in voltage, and thus improving stability compared to a conventional battery cell.

The above-mentioned electrode assembly and a battery cell including the same can be applied to battery modules, battery packs, and various devices. Such devices can be applied to a vehicle means such as an electric bicycle, an electric vehicle, or a hybrid vehicle, but the present disclosure is not limited thereto, and is applicable to various devices that can use a battery module and a battery cell including the same, which is also falls under the scope of the present disclosure.

### [Description of Reference Numerals]

1000: electrode assembly
100: first unit cell
110: first negative electrode
120: second negative electrode
130: first separator
200: second mono-cell
210: second negative electrode
220: second positive electrode
230: second separator
300: third separator

## Claims

1. An electrode assembly (1000) for a lithium secondary battery configured to stack a plurality of unit cells including a negative electrode (110), a positive electrode (120) and a separator (130) and to include a separator (130) located between the plurality of unit cells, the electrode assembly (1000) comprising:
a first unit cell (100) in which an end of the negative electrode (110) protrudes more than an end of the positive electrode (120);
a second unit cell (200) in which an end of the positive electrode (220) protrudes more than an end of the negative electrode (210);
the second unit cell (200) includes a second negative electrode (210), a second positive electrode (220), and a second separator (230) located between the second negative electrode (210) and the second positive electrode (220),
an end of the second positive electrode (220) protrudes more than an end of the second negative electrode (210), and **characterized in that**
a length of the second positive electrode (220) is longer than a length of the second negative electrode (210).

2. The electrode assembly (1000) of claim 1, wherein:
a difference between the length of the second negative electrode (210) and the length of the second positive electrode (220) is less than 1%.

3. The electrode assembly (1000) of claim 1, wherein:
a difference between the length of the second negative electrode (210) and the length of the second positive electrode (220) is 0.4% or less.

4. The electrode assembly (1000) of claim 1, wherein:
a distance between an end of the second negative electrode (210) and an end of the second separator (230) is longer than a distance between an end of the second positive electrode (220) and an end of the second separator (230).

5. The electrode assembly (1000) of claim 1, wherein:
the second unit cell (200) deposits lithium at a potential lower than that of the first unit cell (100).

6. The electrode assembly (1000) of claim 5, wherein:
the second unit cell (200) deposits lithium when the voltage applied to the second unit cell (200) is 4.5V or more and 5.5V or less.

7. The electrode assembly (1000) of claim 5, wherein:
the second unit cell (200) is configured such that a capacity appearance of the positive electrode (220) of the second unit cell (200) is greater than a capacity appearance of the negative electrode of the second unit cell (200).

8. The electrode assembly (1000) of claim 1, wherein:
the number of the first unit cells (100) is at least one or more.

9. The electrode assembly (1000) of claim 8, wherein:
when a plurality of first unit cells (100) are stacked to form a stacked body, the second unit cell (200) is provided adjacent to the first unit cell (100) located at the outermost side in the stacking direction of the stacked body.

10. The electrode assembly (1000) of claim 9, wherein:
the second unit cell (200) is an outermost unit cell.

11. The electrode assembly (1000) of claim 8, wherein:
the second unit cell (200) is located between the plurality of first unit cells (100).

12. The electrode assembly (1000) of claim 1, wherein:
the electrode assembly is configured such that as the number of the second unit cell (200) increases, a maximum voltage during overcharge of the battery decreases.

13. A battery cell comprising the electrode assembly (1000) as set forth in claim 1.

## Patentansprüche

1. Elektrodenanordnung (1000) für eine Lithium-Sekundärbatterie, die so konfiguriert ist, dass sie eine Vielzahl von Einheitszellen stapelt, die eine negative Elektrode (110), eine positive Elektrode (120) und einen Separator (130) enthalten, und dass sie einen Separator (130) enthält, der sich zwischen der Vielzahl von Einheitszellen befindet, wobei die Elektrodenanordnung (1000) umfasst:
eine erste Einheitszelle (100), bei der ein Ende der negativen Elektrode (110) weiter vorsteht als ein Ende der positiven Elektrode (120);
eine zweite Einheitszelle (200), bei der ein Ende der positiven Elektrode (220) weiter vorsteht als ein Ende der negativen Elektrode (210);
wobei die zweite Einheitszelle (200) eine zweite negative Elektrode (210), eine zweite positive Elektrode (220) und einen zweiten Separator (230) enthält, der sich zwischen der zweiten negativen Elektrode (210) und der zweiten positiven Elektrode (220) befindet,
wobei ein Ende der zweiten positiven Elektrode (220) weiter vorsteht als ein Ende der zweiten negativen Elektrode (210), und **dadurch gekennzeichnet, dass**
eine Länge der zweiten positiven Elektrode (220) länger ist als eine Länge der zweiten negativen Elektrode (210).

2. Elektrodenanordnung (1000) nach Anspruch 1, wobei:
ein Unterschied zwischen der Länge der zweiten negativen Elektrode (210) und der Länge der zweiten positiven Elektrode (220) weniger als 1 % beträgt.

3. Elektrodenanordnung (1000) nach Anspruch 1, wobei:
ein Unterschied zwischen der Länge der zweiten negativen Elektrode (210) und der Länge der zweiten positiven Elektrode (220) 0,4 % oder weniger beträgt.

4. Elektrodenanordnung (1000) nach Anspruch 1, wobei:
ein Abstand zwischen einem Ende der zweiten negativen Elektrode (210) und einem Ende des zweiten Separators (230) länger ist als ein Abstand zwischen einem Ende der zweiten positiven Elektrode (220) und einem Ende des zweiten Separators (230).

5. Elektrodenanordnung (1000) nach Anspruch 1, wobei:
die zweite Einheitszelle (200) Lithium bei einem Potential ablagert, das niedriger ist als das der ersten Einheitszelle (100).

6. Elektrodenanordnung (1000) nach Anspruch 5, wobei:
die zweite Einheitszelle (200) Lithium ablagert, wenn die an die zweite Einheitszelle (200) angelegte Spannung 4,5 V oder mehr und 5,5 V oder weniger beträgt.

7. Elektrodenanordnung (1000) nach Anspruch 5, wobei:
die zweite Einheitszelle (200) so konfiguriert ist, dass eine Kapazitätserscheinung der positiven Elektrode (220) der zweiten Einheitszelle (200) größer ist als eine Kapazitätserscheinung der negativen Elektrode der zweiten Einheitszelle (200).

8. Elektrodenanordnung (1000) nach Anspruch 1, wobei:
die Anzahl der ersten Einheitszellen (100) mindestens eins oder mehr beträgt.

9. Elektrodenanordnung (1000) nach Anspruch 8, wobei:
wenn eine Vielzahl von ersten Einheitszellen (100) gestapelt wird, um einen Stapelkörper zu bilden, die zweite Einheitszelle (200) benachbart zu der ersten Einheitszelle (100) vorgesehen ist, die sich an der äußersten Seite in der Stapelrichtung des Stapelkörpers befindet.

10. Elektrodenanordnung (1000) nach Anspruch 9, wobei:
die zweite Einheitszelle (200) eine äußerste Einheitszelle ist.

11. Elektrodenanordnung (1000) nach Anspruch 8, wobei:
die zweite Einheitszelle (200) sich zwischen der Vielzahl von ersten Einheitszellen (100) befindet.

12. Elektrodenanordnung (1000) nach Anspruch 1, wobei:
die Elektrodenanordnung so konfiguriert ist, dass mit zunehmender Anzahl der zweiten Einheitszelle (200) die maximale Spannung während des Überladens der Batterie abnimmt.

13. Batteriezelle, umfassend die Elektrodenanordnung (1000) wie in Anspruch 1 dargelegt.

## Revendications

1. Ensemble d'électrodes (1000) pour une batterie secondaire au lithium configuré pour empiler une pluralité de cellules unitaires incluant une électrode négative (110), une électrode positive (120) et un séparateur (130) et pour inclure un séparateur (130) situé entre la pluralité de cellules unitaires, l'ensemble d'électrodes (1000) comprenant :
une première cellule unitaire (100) dans laquelle une extrémité de l'électrode négative (110) fait saillie plus qu'une extrémité de l'électrode positive (120) ;
une seconde cellule unitaire (200) dans laquelle une extrémité de l'électrode positive (220) fait saillie plus qu'une extrémité de l'électrode négative (210) ;
la seconde cellule unitaire (200) inclut une seconde électrode négative (210), une seconde électrode positive (220), et un second séparateur (230) situé entre la seconde électrode négative (210) et la seconde électrode positive (220),
une extrémité de la seconde électrode positive (220) fait saillie plus qu'une extrémité de la seconde électrode négative (210), et **caractérisé en ce que**
une longueur de la seconde électrode positive (220) est plus longue qu'une longueur de la seconde électrode négative (210).

2. L'ensemble d'électrodes (1000) selon la revendication 1, dans lequel :
une différence entre la longueur de la seconde électrode négative (210) et la longueur de la seconde électrode positive (220) est inférieure à 1 %.

3. L'ensemble d'électrodes (1000) selon la revendication 1, dans lequel :
une différence entre la longueur de la seconde électrode négative (210) et la longueur de la seconde électrode positive (220) est de 0,4 % ou moins.

4. L'ensemble d'électrodes (1000) selon la revendication 1, dans lequel :
une distance entre une extrémité de la seconde électrode négative (210) et une extrémité du second séparateur (230) est plus longue qu'une distance entre une extrémité de la seconde électrode positive (220) et une extrémité du second séparateur (230).

5. L'ensemble d'électrodes (1000) selon la revendication 1, dans lequel:
la seconde cellule unitaire (200) dépose du lithium à un potentiel inférieur à celui de la première cellule unitaire (100).

6. L'ensemble d'électrodes (1000) selon la revendication 5, dans lequel:
la seconde cellule unitaire (200) dépose du lithium lorsque la tension appliquée à la seconde cellule unitaire (200) est de 4,5 V ou plus et de 5,5 V ou moins.

7. L'ensemble d'électrodes (1000) selon la revendication 5, dans lequel:
la seconde cellule unitaire (200) est configurée de telle sorte qu'une apparence de capacité de l'électrode positive (220) de la seconde cellule unitaire (200) est supérieure à une apparence de capacité de l'électrode négative de la seconde cellule unitaire (200).

8. L'ensemble d'électrodes (1000) selon la revendication 1, dans lequel :
le nombre des premières cellules unitaires (100) est d'au moins une ou plus.

9. L'ensemble d'électrodes (1000) selon la revendication 8, dans lequel:
lorsqu'une pluralité de premières cellules unitaires (100) sont empilées pour former un corps empilé, la seconde cellule unitaire (200) est prévue adjacente à la première cellule unitaire (100) située sur le côté le plus à l'extérieur dans la direction d'empilement du corps empilé.

10. L'ensemble d'électrodes (1000) selon la revendication 9, dans lequel:
la seconde cellule unitaire (200) est une cellule unitaire la plus à l'extérieur.

11. L'ensemble d'électrodes (1000) selon la revendication 8, dans lequel:
la seconde cellule unitaire (200) est située entre la pluralité de premières cellules unitaires (100).

12. L'ensemble d'électrodes (1000) selon la revendication 1, dans lequel :
l'ensemble d'électrodes est configuré de telle sorte que, à mesure que le nombre de la seconde cellule unitaire (200) augmente, une tension maximale pendant la surcharge de la batterie diminue.

13. Élément de batterie comprenant l'ensemble d'électrodes (1000) tel que défini dans la revendication 1.
